# EUROPÄISCHE PATENTSCHRIFT

(11) **EP 3 542 379 B1**
(45) Veröffentlichungstag und Bekanntmachung des Hinweises auf die Patenterteilung: **12.10.2022**
(21) Anmeldenummer: 17811470.8
(22) Anmeldetag: 20.11.2017
(51) Int. Cl.: H01F 41/077, H01F 41/098

(54) **VERFAHREN UND VORRICHTUNG ZUR HERSTELLUNG EINES WINDUNGSKÖRPERS**
METHOD AND DEVICE FOR PRODUCING A WINDING ELEMENT
PROCÉDÉ ET DISPOSITIF DE FABRICATION D'UN CORPS BOBINÉ

(30) Priorität: 18.11.2016 DE 102016122177; 18.11.2016 DE 102016122176
(43) Veröffentlichungstag der Anmeldung: 25.09.2019
(73) Patentinhaber: Fraunhofer-Gesellschaft zur Förderung der angewandten Forschung e.V., 80686 München (DE)
(72) Erfinder: WERNER, Markus, 09127 Chemnitz (DE)
(74) Vertreter: Grünecker Patent- und Rechtsanwälte PartG mbB
(86) Internationale Anmeldenummer: PCT/EP2017/079820
(87) Internationale Veröffentlichungsnummer: WO 2018/091718

(56) Entgegenhaltungen:
- EP-A1- 1 578 002
- DE-A1-102014 000 636
- US-A- 2 371 674
- US-A- 3 320 788
- US-A- 6 141 860
- US-A1- 2007 209 194

## Beschreibung

### Gebiet der Erfindung

Die Erfindung betrifft eine Vorrichtung sowie ein Verfahren zur Herstellung eines Windungskörpers aus einem Draht, wie beispielsweise einer elektrotechnischen Spule aus einem runden Kupferdraht.

### Hintergrund der Erfindung

Zur Steigerung der Leistungsfähigkeit elektrischer Maschinen (wie z. B. Generatoren und Elektromotoren) und anderer Leistungskomponenten (wie z. B. Transformatoren und Drosseln) werden zunehmend Spulen aus Runddraht durch Spulen aus Rechteckdraht bzw. aus anderweitig im Querschnitt angepassten Drähten ersetzt. Durch solche Querschnittsanpassungen lässt sich der Füllfaktor, also das Verhältnis von Drahtquerschnitten zum gesamten Wickelraum, der aufgrund der geometrischen Verhältnisse bei paketierten Runddrähten auf einen Maximalwert von nur ca. 55% beschränkt, auf eine Größenordnung von ca. 90% erhöhen.

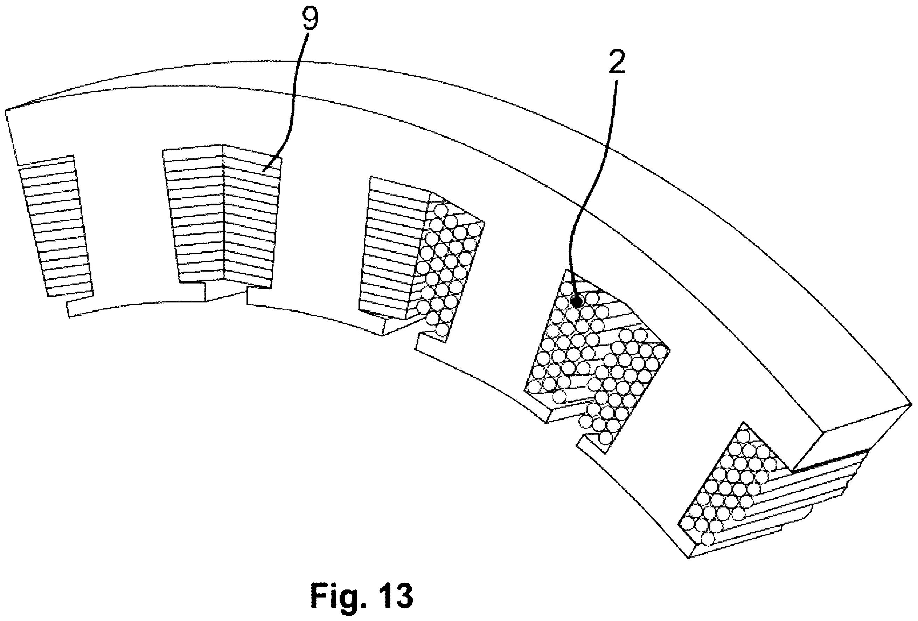

Diese signifikante Erhöhung des Nutfüllfaktors ist aus Fig. 13, die mehrere im Stator einer Maschine eingelegte Spulen zeigt, deutlich erkennbar. Die in der rechten Zeichnungshälfte der Fig. 13 gezeigten Spulen aus wild gewickeltem Runddraht 2 weisen eine schlechte Nutfüllung (und somit einen niedrigen Füllfaktor) auf. Aufgrund der runden Gestalt des Drahtes 2 sind mit Luft gefüllte Zwischenräume zwischen den einzelnen Windungen einer Spule bzw. zwischen einander benachbarten Spulen unvermeidbar, was zu verhältnismäßig schlechten elektrischen Kennwerten führt. Demgegenüber wird durch die in der linken Zeichnungshälfte der Fig. 13 gezeigten, aus einem Flachdraht 9 gewickelten Spulen eine deutliche bessere Nutfüllung (und somit ein hoher Füllfaktor) mit weniger Luftzwischenräumen innerhalb der Spule und zwischen benachbarten Spulen erhalten. Damit wird eine höhere Effizienz des jeweiligen elektrischen Bauteils bewirkt. Zudem wird die Wärmeableitung aus der Wicklung heraus deutlich verbessert. Eine bessere Entwärmung der Leistungsabschnitte der Spulen führt wiederum zu einer Steigerung der Performance des jeweiligen elektrischen Bauteils.

Nachteilig bei den vorbeschriebenen Flachdrahtspulen ist jedoch, dass derartige Spulen bislang immer noch sehr aufwendig und somit sehr teuer in ihrer Herstellung sind.

Das Konzept eines gleichzeitigen Wickelns der dreidimensionalen Windungskörperform und Veränderns des zugeführten Drahtquerschnitts ist aus US 2017/209194 A1 vorbekannt, wo gelehrt wird, bei einem Verfahren bzw. einer Vorrichtung zur Herstellung einer elektrischen Spule während des Aufwickelns des Drahtes um einen sich drehenden Dorn mittels Formrollen eine querschnittsverändernde Presskraft auf den zugeführten Draht auszuüben.

DE 10 2013 012 659 A1 beschreibt in diesem Zusammenhang ein Verfahren, bei dem ein band- oder drahtförmiges Halbzeug zu einer Spule mit einer oder mehreren Wicklungen vorgewickelt wird und diese vorgewickelte Spule anschließend in ein Prägewerkzeug aus mehreren übereinander angeordneten ringförmigen Segmenten eingefädelt wird. Durch ein Zusammenfahren der Segmente des Prägewerkzeugs werden alle Windungen der vorgewickelten Spule mit einem in Richtung der Spulenwicklungsachse wirkenden axialen Druck beaufschlagt und die Drahtquerschnitte somit in gewünschter Weise umgeformt.

Gegenüber der energieintensiven gießtechnischen Spulenherstellung oder gegenüber hochkomplexen Fügeverfahren, bei dem einzelne, querschnittsverschiedene Wicklungen erst in voneinander getrennten Umformschritten hergestellt und dann miteinander gefügt werden, eröffnet DE 10 2013 012 659 A1 zwar eine rationellere und damit kostengünstigere Art der Fertigung von komplexen Spulenformen. Die Zweistufigkeit des Herstellungsprozesses (erfordernd einen Vorwickel- und davon getrennten Prägeschritt) und die Komplexität des benötigten, aus mehreren axial übereinander angeordneten Segmenten bestehenden Prägewerkzeugs erschwert jedoch eine wirtschaftliche und flexible Spulenfertigung. Dies gilt insbesondere für den Prototypenbau und die Kleinserienproduktion von Spulen, wo hohe Durchlaufzeiten und Werkzeugkosten nicht tolerierbar sind.

In Anbetracht der oben erwähnten Nachteile ist es die Aufgabe der Erfindung, eine Vorrichtung sowie ein Verfahren bereitzustellen, mit der bzw. mit dem aus Draht (wie insbesondere einem runden Kupferdraht) ein (später z. B. als elektrotechnische Spule einsetzbarer) Windungskörper, der einen hohen Füllfaktor des Drahtmateriales erreicht, in wirtschaftlicher und flexibler Weise hergestellt werden kann.

### Zusammenfassung der Erfindung

Gelöst wird diese Aufgabe in Bezug auf die Vorrichtung durch eine Vorrichtung zur Herstellung eines Windungskörpers aus einem zugeführten Draht mit den Merkmalen des unabhängigen Patentanspruchs 1. Hinsichtlich des Verfahrens wird diese Aufgabe gelöst durch ein Verfahren zur Herstellung eines Windungskörpers aus einem zugeführten Draht mit den Merkmalen des unabhängigen Patentanspruchs 5.

Gegenüber dem Stand der Technik und einer dort gelehrten aufwendigen, mehrstufigen Umformtechnologie findet sowohl der Wickelvorgang, um dem Windungskörper seine gewünschte dreidimensionale Gestalt mit mehreren schraubengangförmig übereinander gewickelten Windungen zu geben, als auch die Querschnittsverformung des Spulendrahtes mittels des vorbeschriebenen Verfahrens und der vorbeschriebenen Vorrichtung gleichzeitig und/oder mit einem äußerst einfach aufgebauten Werkzeug statt, sodass Windungskörper mit hohem Füllfaktor und nahezu keinen leistungsmindernden Luftzwischenräumen (wie in der linken Zeichnungshälfte von Fig. 13 gezeigt) auf wirtschaftliche Weise in einem einstufigen und/oder äußerst einfachen und flexiblen Herstellungsprozess hergestellt werden können.

### Kurzbeschreibung der Zeichnungen

- Fig. 1A und 1B: ein erstes Ausführungsbeispiel einer erfindungsgemäßen Vorrichtung zur Herstellung eines Windungskörpers unter Verwendung eines Dornes in einer schematischen Seitenansicht und Draufsicht;
- Fig. 2A und 2B: ein zweites Ausführungsbeispiel einer erfindungsgemäßen Vorrichtung zur Herstellung eines Windungskörpers unter Verwendung eines Dornes in einer schematischen Seitenansicht und Draufsicht;
- Fig. 3A und 3B: ein drittes Ausführungsbeispiel einer erfindungsgemäßen Vorrichtung zur Herstellung eines Windungskörpers unter Verwendung eines Dornes in einer schematischen Seitenansicht und Draufsicht;
- Fig. 4 und 5: zwei alternative Ausführungsbeispiele einer erfindungsgemäßen Vorrichtung zur Herstellung eines Windungskörpers unter Verwendung eines Gesenkes in einer schematischen Längsschnittansicht;
- Fig. 6 und 7: zwei alternative Ausführungsbeispiele einer nicht von der Erfindung umfassten Vorrichtung zur Herstellung eines Windungskörpers unter Verwendung eines Dornes mit einer festen Nut in einer schematischen Längsschnittansicht;
- Fig. 8 und 9: zwei alternative Ausführungsbeispiele eines in der nicht von der Erfindung umfassten Vorrichtung nach Fig. 6 und 7 zum Einsatz kommenden, mehrteiligen Dornes in einer Querschnittsansicht;
- Fig. 10A und 10B: zwei alternative Ausführungsbeispiele einer nicht von der Erfindung umfassten Vorrichtung zur Herstellung eines Windungskörpers unter Verwendung eines Dornes mit einer flexiblen Nut in einer schematischen Längsschnittansicht;
- Fig. 11 und 12: zwei alternative Ausführungsbeispiele für die Weiterbildung der in Fig. 10A und 10B gezeigten, nicht von der Erfindung umfassten Vorrichtung in einer vergrößerten Längsschnittansicht im Bereich eines Einlegeteils; und
- Fig. 13: Gegenüberstellung der Nutfüllung bei Verwendung von Spulen aus Runddraht (rechte Zeichnungshälfte) oder Flachdraht (linke Zeichnungshälfte) im Stator einer elektrischen Maschine.

### Detaillierte Beschreibung der Erfindung

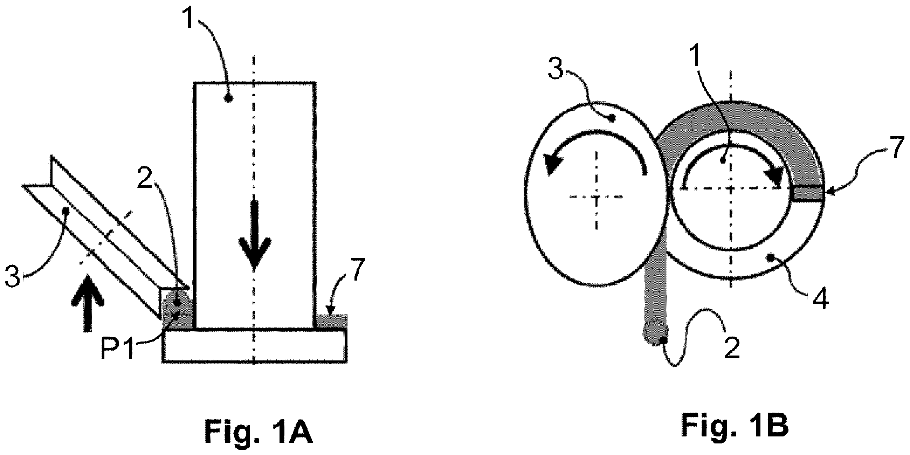

Der in den Ausführungsbeispielen gemäß Fig. 1A und 1B, 2A und 2B, 3A und 3B, 6 und 7 illustrierte Lösungsansatz besteht darin, beim Wickeln des Drahtes 2 (insbesondere Kupferdrahtes) mit einem rundem oder anderweitig geformten (z. B. ovalen oder eckigen) Ausgangsquerschnitt um einen in Drehung befindlichen Dorn 1, 11, 21, 31 der den Innenraum des entstehenden Windungskörpers 7, 17, 27, 37 repräsentiert, den zugeführten Draht 2 durch Nutzung eines Formwerkzeugs (bspw. einer Formwalze 3, 3a, 3b, 13) hinsichtlich des Querschnitts in eine gewünschte Form (bspw. Trapezform) zu überführen.

Das zeitgleiche Wickeln des Windungskörpers 7, 17, 27, 37 und Querschnittsverformen des zugeführten Drahtes 2 kann durch die in den Figuren dargestellten Vorrichtungen erreicht werden. So ist gemäß Fig. 1A und 1B eine erste Vorrichtung in einer Seitenansicht und einer dazu senkrechten Draufsicht gezeigt. Diese Vorrichtung umfasst einen Dorn 1, an dem eine radial vorstehende, feste Schulter 4 ausgebildet ist. Dorn 1 und Schulter 4 werden während des Wickelvorganges durch einen nicht gezeigten Antrieb in Rotation um ihre Längsachse versetzt. Gleichzeitig werden Dorn 1 und Schulter 4 während des Wickelvorganges in Längsrichtung (d.h. in einer Richtung parallel zur Rotationsachse) je Umdrehung des Drahtes um die Höhe des rechteckigen Drahtquerschnitts in Pfeilrichtung nach unten verschoben.

Durch diese Überlagerung der Drehbewegung und der Vorschubbewegung des Dornes 1 wird der Draht 2 unter Zugwirkung schraubenlinienförmig zum gewünschten Windungskörper 7 aufgewickelt. Zur gleichzeitigen Querschnittsänderung ist eine um ihre zentrale Längsachse rotierende, im Wesentlichen zylindrisch ausgebildete Formwalze 3 vorgesehen. Die rotierende Formwalze 3 ist so angeordnet, dass sie am Wickelpunkt P1, d.h. am Punkt, an dem der Draht 2 um den Dorn 1 gebogen wird, eine querschnittsverändernde Umformkraft auf den Draht 2 ausübt. Die Formwalze 3 ist schräg angestellt, d. h. die zentrale Rotationsachse der Formwalze 3 und die zentrale Rotationsachse des Dornes 1 schließen zwischen sich einen spitzen Winkel ein, wobei - in Draufsicht (gemäß Fig. 1B) gesehen - die Rotationsrichtung der Formwalze 3 entgegengesetzt zur Rotationsrichtung des Dornes 1 ausgerichtet ist.

Alternativ oder zusätzlich zur Vorschubbewegung des mit der feststehenden Schulter 4 versehenen Dornes 1 kann die Formwalze 3 ebenfalls eine parallel zur Längsachse des Dornes 1 (und somit des entstehenden Windungskörpers 7) verlaufende Vorschubbewegung ausführen, die (im Falle einer gleichzeitigen Bewegung von Dorn 1 und Formwalze 3) in entgegengesetzter Richtung zu derjenigen des Dornes 1 erfolgt. Durch die Vorschubbewegung von Dorn 1 und/oder Formwalze 3 ist sichergestellt, dass die Formwalze 3 immer am Aufwickelpunkt P1 des Drahtes 2 auf der Außenmantelfläche des Dornes 1 eine den Drahtquerschnitt verändernden Umformkraft ausübt. Im Gegensatz zu einem Prägewerkzeug (wie in der DE 10 2013 012 659 A1), wo auf alle Windungen einer vorgewickelten Spule gleichzeitig eine querschnittsverändernde Prägekraft einwirkt, ist in der erfindungsgemäßen Vorrichtung die vom Umformwerkzeug (hier: rotierende Formwalze 3) ausgeübte Umformkraft auf den Aufwickelpunkt P1 beschränkt, sodass bei der erfindungsgemäßen Vorrichtung vorteilhafterweise nur geringe Umformkräfte und -momente notwendig sind.

Im Fall eines im Querschnitt runden Dornes 1, 11 wird für das Konzept eines gleichzeitigen Wickelns der dreidimensionalen Windungskörperform und Veränderns des zugeführten Drahtquerschnitts ausschließlich eine reine Rotationsbewegung des Dornes 1, 11 benötigt. Bei einem im Querschnitt rechteckförmigen Dorn 1 ist hingegen eine zusätzliche translatorische Vorschubbewegung von Dorn 1, 11 und/oder Formwalze 3, 3a, 3b erforderlich.

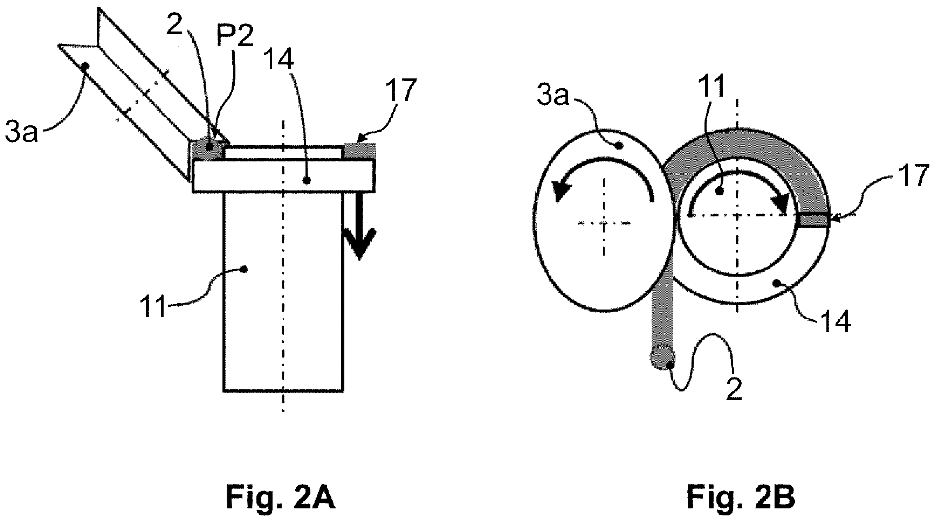

Die Werkzeuganordnung nach Fig. 2A und 2B unterscheidet sich von derjenigen nach Fig. 1A und 1B lediglich in kinematischer Hinsicht. Die radial vorstehende Schulter 14 ist nicht fest, sondern in Bezug auf den Dorn 1 in Längsrichtung verschiebbar. Infolgedessen sind der Dorn 11 und die Formwalze 3 in ihrer Position fixiert und führen während des Wickelvorganges nur eine Rotationsbewegung um ihre zentrale Längsachse aus. Im Laufe des Wickelvorganges wird die Schulter 14 mit zunehmender Länge des Windungskörpers 7 vom Stirnende des Dornes 11 kontinuierlich zurückverschoben. Der Aufwickelpunkt P2 des Drahtes 2 um den Dorn 11, an dem gleichzeitig auch die Querschnittsveränderung erfolgt, ist somit auch immer ortsfest am (in Fig. 2A oberen) Stirnende des Dornes 11 ausgebildet.

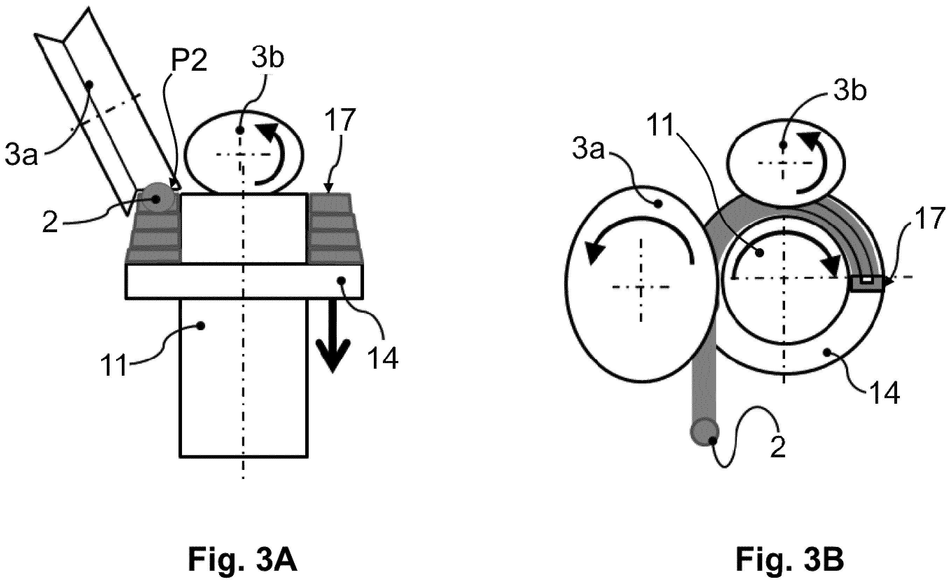

Die Werkzeuganordnung nach Fig. 3A und 3B weist strukturell einen ähnlichen Aufbau wie die bereits im Vorhergehenden unter Bezugnahme auf Fig. 2A und 2B beschriebene Werkzeuganordnung auf. Demnach ist die Schulter 14 wiederum gegenüber dem Dorn 11 in Längsrichtung verschiebbar gelagert, sodass der Aufwickelpunkt P2 immer stationär am in Fig. 3A dargestellten oberen Stirnende des Dornes 11 verbleibt, mit der vorteilhaften Folge, dass sowohl die Formwalze 3a als auch der Dorn 11 in ihrer Längsrichtungsposition ortsfest ausgeführt werden können. Durch die mit fortschreitender Drahtzufuhr und zunehmender Windungsanzahl des Windungskörpers 7 von der beweglichen Schulter 14 in Längsrichtung vollzogene Vorschubbewegung ist jederzeit eine axiale Abstützung der Spule 14 sichergestellt, um am Aufwickelpunkt P2 unter Druckeinwirkung der Formwalze 3 eine lokal begrenzte Querschnittsumformung des zugeführten Runddrahtes 2 zu bewirken.

Der einzige strukturelle Unterschied zum Ausführungsbeispiel nach Fig. 2A und 2B besteht darin, dass gemäß Fig. 3A und 3B entlang des Außenumfangs des Dornes 11 nicht nur eine, sondern zwei formgebende Walzen 3a, 3b angebracht sind. Die erste rotierende Formwalze 3a weist die gleiche Anordnung und Ausrichtung wie die in den vorangehenden Ausführungsbeispielen verwendete Formwalze 3 auf. Demzufolge verläuft die zentrale Rotationachse dieser ersten Formwalze 3a ebenfalls schräg zur Rotationsachse des Dornes 11 (und somit zur Wicklungsachse des Windungskörpers 17), wobei eine den Drahtquerschnitt verändernde Umformkraft dadurch erzeugt wird, dass der zugeführte Draht 2 unter Presseinwirkung zwischen der Außenumfangsfläche des Formwalze 3a, der Außenumfangsfläche des Dornes 11 und der Oberfläche der Schulter 14 bzw. der zuletzt auf der Schulter 14 aufgewickelten Windung hindurchgeführt wird. Die Querschnittsveränderung erfolgt dabei unmittelbar am Aufwickelpunkt P2 auf der Außenumfangsfläche des Dornes 11.

Die zweite Formwalze 3b ist in Draufsicht gemäß Fig. 3B gesehen in einem Winkel von etwa 90° zur ersten Formwalze 3a versetzt. Durch Verwendung dieser zweiten Formwalze 3b kann die Querschnittsform des Drahtquerschnitts einer zusätzlichen Umformoperation unterzogen werden. Diese zusätzliche Umformoperation kann z. B. darin bestehen, dass Kanten verrundet werden oder Kühlfahnen angeformt werden oder Verprägungen (zur Erzielung einer versteifenden Wirkung) bzw. Kanäle (zur Schaffung einer Fluidführung) eingeformt werden.

Durch die in Fig. 3A und 3B gezeigte Werkzeuganordnung wird ein konischer Windungskörper 17 mit einem sich in Drahtlängsrichtung kontinuierlich verändernden trapezförmigen Drahtquerschnitt hergestellt. Eine solche konische Ausbildung des Windungskörpers 17 ist insbesondere für den möglichst luftspaltfreien Einbau von Spulen in trapezförmige Nuten, wie sie regelmäßig zwischen den Polzähnen eines Stators vorliegen (siehe Fig. 13), von Vorteil. Um den Windungskörper 17 mit einer an diese Einbausituation angepassten konischen Außenmantelfläche auszustatten, vollzieht die Formwalze 3a zusätzlich zur Rotationsbewegung um ihre Längsachse eine Zustellbewegung in Richtung des (ebenfalls um seine Längsachse rotierenden) Dorns 11, so dass sich mit fortschreitender Wicklung und demzufolge fortschreitender Vorschubbewegung der Schulter 14 eine kontinuierliche Reduzierung des Spulenaußendurchmessers ergibt. Die zweite Formwalze 3b kann in Anpassung an die erste Formwalze 3a ebenfalls in radialer Richtung des Dorns zustellbar sein, um die Lage einer von dieser zweiten Formwalze 3b zusätzlich in das Drahtmaterial eingebrachten Verformung (z.B. Kanal, Sicke ...) an den sich konisch verjüngenden Windungskörper-Außendurchmesser anzupassen. Mittels einer numerischen Steuerung der Richtung und Geschwindigkeit der von Schulter 14 und Formwalzen 3a, 3b ausgeführten translatorischen Bewegungen kann dabei im herzustellenden Windungskörper 17 nahezu jede beliebige konvexe oder konkave Außenkontur erzeugt werden.

Beispielhaft ist in Fig. 1A bis 5 jeweils eine Vorrichtung zur Herstellung eines Windungskörpers 7, 17 mit - in Draufsicht gesehen - konzentrischen kreisförmigen Windungen gezeigt. Jedoch kann durch eine entsprechende Querschnittsgestaltung des Dornes 1, 11 bzw. des Gesenkes 5a, 5b eine erfindungsgemäße Vorrichtung auch ohne Weiteres der Herstellung von Spulen mit - in Draufsicht gesehen - unrunden, insbesondere im Wesentlichen rechteckförmigen Windungen, dienen.

Die Querschnittsverformung des zugeführten Runddrahtes 2 wird in den drei Ausführungsbeispielen nach Fig. 1A bis 3B zu Beginn des Wickelvorganges jeweils dadurch erzielt, dass der Draht 2 durch den zwischen der eingekerbten Außenumfangsfläche der Formwalze 3, der (in den Figuren nach oben weisenden) Stirnfläche der Schulter 4, 14 und der Außenumfangsfläche des Dornes 1, 11 gebildeten Öffnung unter Presskontakt hindurchgezogen wird (vgl. insbesondere Fig. 2A). Auf diese Weise wird der zugeführte Runddraht 2 während des Wickelvorganges zu einem Flachdraht mit einem rechteckförmigen Drahtquerschnitt umgeformt. Gemäß Fig. 13 gewährleistet ein solcher Drahtquerschnitt bei einer Verwendung des Windungskörpers 7, 17 als Spule einen sehr hohen Füllfaktor des elektrisch leitfähigen Drahtmateriales in den Nuten einer elektrischen Maschine. Mit fortschreitender Drahtzufuhr und zunehmender Windungszahl wird der Runddraht 2 zur Querschnittsverformung nicht mehr unmittelbar gegen die Oberfläche der Schulter 4, 14 gepresst, sondern gegen die Oberfläche der vorhergehenden Windung (vgl. insbesondere Fig. 1A und 3A). Allerdings bildet die Schulter 4, 14 in jedem Fall für die am Wickelpunkt P1, P2 stattfindende Querschnittsverformung eine notwendige Abstützung zur Aufnahme der in axialer Richtung wirkenden Presskräfte.

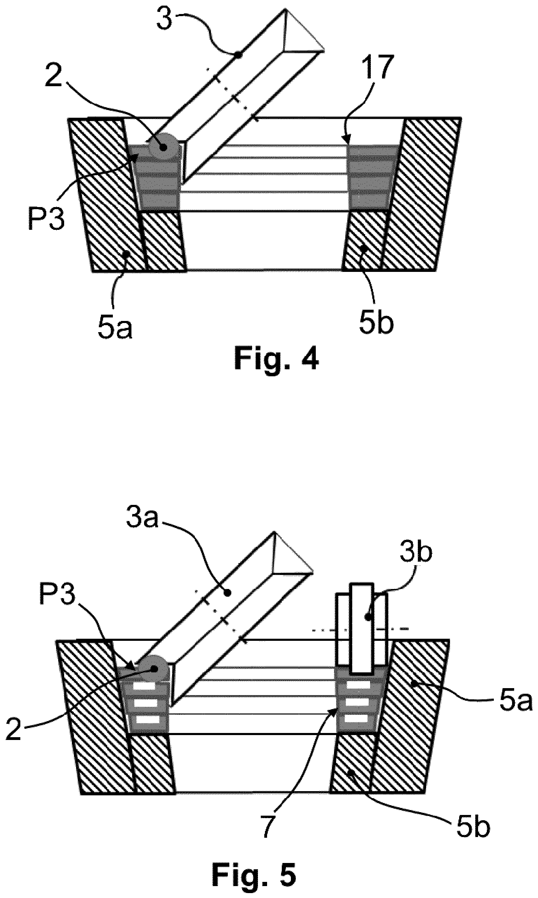

Die in Fig. 4 dargestellte Vorrichtung kommt insbesondere bei der Herstellung großer elektrotechnischer Spulen vorteilhaft zum Einsatz. Der Draht 2 wird hierbei nicht länger um die Außenumfangsfläche eines rotierenden Dornes 1, 11 gewickelt, sondern stattdessen gegen die Innenumfangsfläche eines Gesenkes 5a, 5b angedrückt und dabei durch die vom Gesenk 5a, 4b um seine zentrale Längsachse vollzogene Rotationsbewegung schraubenlinienförmig entlang der Innenumfangsfläche des Gesenkes 5a, 5b zur gewünschten dreidimensionalen Windungskörpergeometrie aufgewickelt.

Zum Andrücken gegen die Innenumfangsfläche des Gesenkes 5a, 5b dient wiederum eine um ihre Längsachse rotierende und mit ihrer Längsachse gegenüber der Längsachse des Gesenkes 5a, 5b schräg angestellte Formwalze 3. Um den Windungskörper 17 mit einer konischen Außenmantelfläche und einem sich dementsprechend in Windungskörper-Längsrichtung kontinuierlich verändernden trapezförmigen Drahtquerschnitt auszubilden, ist die Innenumfangsfläche des Gesenkes (genauer diejenige des Gesenkteils 5a) entsprechend schräg ausgeführt.

Wie bereits in den vorhergehenden Ausführungsbeispielen erfolgt die Querschnittsverformung des als runder Kupferdraht 2 zugeführten Leiters auch in Fig. 4 unmittelbar am Aufwickelpunkt P3, also am Punkt, an dem der zugeführte Kupferdraht 2 auf der Innenumfangsfläche des Gesenkes 5a, 5b gebogen wird. Die Querschnittsverformung erfolgt durch Pressung des runden Kupferdrahtes 2 zwischen der Außenumfangsfläche der Formwalze 3 und der Innenumfangsfläche des Gesenkes 5a, 5b. Um nicht nur in radialer, sondern auch in axialer Richtung eine für die Querschnittsverformung notwendige Abstützung bereitzustellen, ist das Gesenk 5a, 5b an seiner Innenumfangsfläche mit einer radial nach innen vorstehenden Schulter 24 versehen. Hierzu ist das Gesenk zweiteilig ausgebildet, aus einem ersten Gesenkteil 5a, das mit seiner Innenumfangsfläche die radiale Begrenzung des hergestellten Windungskörpers 17 darstellt, und aus einem zweiten Gesenkteil 5b, das die Schulter 24 ausbildet. Auf dieser Schulter 24 liegt die erste (unterste) Windung des entstehenden Windungskörpers 17 auf.

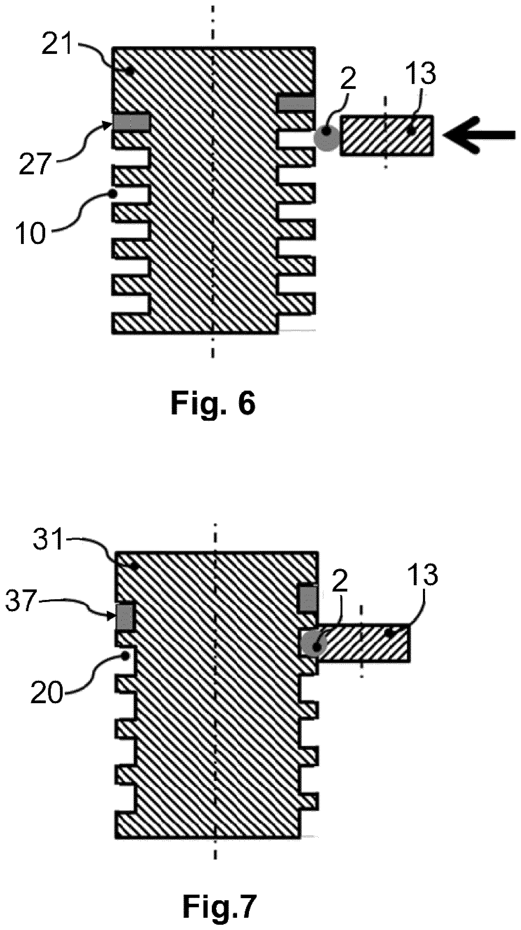

In Entsprechung zu Fig. 3A und 3B kann die in Fig. 4 vorgeschlagene Verwendung eines Gesenkes 5a, 5b zur Herstellung großer Spulen mit großen Biegeradien ebenfalls dahingehend weitergebildet werden, dass hinter einer ersten Formwalze 3a zur Querschnittsverformung des Drahtes 2 am Aufwickelpunkt P3 eine zweite Formwalze 3b angeordnet ist, um während des Wickelvorganges am Drahtquerschnitt eine zusätzliche Umformoperation durchzuführen. Eine solche Weiterbildung geht aus Fig. 6 hervor, wo eine (in Draufsicht um einen Winkel von ca. 90° zur ersten Formwalze 3a versetzte) zweite Formwalze 3b vorgesehen ist, die während des Wickelvorganges den Drahtquerschnitt einer zusätzlichen Umformoperation unterzieht (z. B. zwecks Einbringens einer sickenförmigen Vertiefung, um eine versteifende Wirkung zu erzielen oder Kanäle zur Fluidführung bereitzustellen).

Anstatt einer schräg angestellten, rotierenden Formwalze 3, 3a, 3b, wie jeweils in den Fig. 1A bis 5 beispielhaft gezeigt, kann auch jedes beliebig andere Formwerkzeug (z. B. ein Stempel, eine Rolle ...) zum Einsatz kommen, das in der Lage ist, den Querschnitt des zugeführten Drahtes 2 während des Wickelvorganges am Aufwickelpunkt P1, P2, P3 oder einem nachgelagerten Punkt in seiner Form zu verändern. Der relative Anstellwinkel zwischen Dorn 1, 11 bzw. Gesenk 5a, 5b und Formwalze 3, 3a, 3b gemäß den vorbeschriebenen Fig. 1A bis 5 kann dabei gezielt so eingestellt werden, dass Rückfederungseffekte und dergleichen kompensiert und ausgeglichen werden.

Auch bei der in Fig. 6 und 7 gezeigten Vorrichtung wird in Übereinstimmung zu Fig. 1A bis 3B ein elektrisch leitfähiger Draht 2 (insbesondere Kupferdraht) mit einem runden Ausgangsquerschnitt um einen Dorn 21, 31, der während des Wickelvorganges den Innenraum der entstehenden Spule 27, 37 ausfüllt, gewickelt und gleichzeitig durch Nutzung eines Formwerkzeugs (nämlich einer um ihre Längsachse rotierenden Formwalze 3) hinsichtlich des Leiterquerschnitts in eine gewünschte Form (hier: in eine trapezförmige Form) gebracht. Des Weiteren findet in Übereinstimmung zu den weiter oben beschriebenen Ausführungsbeispielen auch in Fig. 6 und 7 das Wickeln des Drahtes und das Ändern seiner Querschnittsform gleichzeitig statt.

In Weiterbildung der vorangegangenen Ausführungsbeispiele ist jedoch bei den beiden Vorrichtungen nach Fig. 6 und 7 an der äußeren Umfangsfläche des Dornes 21, 31 jeweils eine feste schraubenlinienförmige Nut 10, 20 ausgebildet, in die der Draht 2 während des Wickelvorganges bei rotierendem Dorn 21, 31 eingezogen/eingewickelt wird. Die Nut 21, 31 weist im Querschnitt eine rechteckförmige Gestalt mit einer in Längsrichtung des Dornes 21, 31 gerichteten Längenabmessung und einer in radialer Richtung des Dornes 21, 31 gerichteten Breitenabmessung auf, die dem Drahtquerschnitt des herzustellenden Windungskörpers 27, 37 entspricht. Mittels eines Formwerkzeugs 13, welches in radialer Richtung des Dorns 21 zugestellt wird, wird der zugeführte Runddraht 2 in die Nut gedrückt und erhält dabei einen an den Nutquerschnitt angepassten rechteckförmigen Querschnitt. Die radiale Zustellbewegung des Formwerkzeugs 13 ist in Fig. 6 durch einen dicken schwarzen Bewegungspfeil symbolisiert. Als Formwerkzeug dient in den nicht von der Erfindung umfassten Vorrichtungen nach Fig. 6 und 7 wiederum jeweils eine um ihre zentrale Längsachse rotierende Formwalze 13, wobei die Längsachsen (Rotationsachsen) von Dorn 21, 31 und Formwalze 13 hier aber parallel zueinander ausgerichtet sind.

Durch eine an die Umdrehungsgeschwindigkeit des Dornes 21, 31 angepasste Umdrehungsgeschwindigkeit der Formwalze 13 wird der Wickelvorgang durch die Formwalze 13 nicht beeinträchtigt, wobei die Formwalze 13 aber infolge ihrer Zustellbewegung über die Außenmantelfläche die notwendige Presskraft an den Runddraht 2 zur Umformung der Drahtquerschnitts in der Nut 10, 20 überträgt. Formwalze 13 und Nut 10, 20 wirken also in Fig. 6 und 7 quasi als Stempel und Matrize zur lokalen Umformung des Drahtquerschnitts von der runden Ausgangsform in die gewünschte Rechteckform. Nicht explizit dargestellt, aber im Sinne dieses Ausführungsbeispiels ist es, die Nut 10, 20 auf der nach außen hin offenen Seite mit Einlaufschrägen oder Einlaufrundungen zu versehen, so dass das Einpressen des Drahtmateriales in die Nut 10, 20 durch die Formwalze 13 erleichtert wird.

In Übereinstimmung zu den Vorrichtungen nach Fig. 1A bis 5 wird auch durch die Vorrichtungen nach Fig. 6 und 7 die Möglichkeit eröffnet, die dreidimensional aufgewickelte Form des Windungskörpers 27, 37 und die Querschnittsform des Drahtes 2 gleichzeitig in einem kontinuierlichen Verfahren mittels einer einzigen Werkzeuganordnung herzustellen. Gegenüber einem Wickeln und anschließenden Gesenkformen entfällt somit das Gesenk, welches aber dennoch zum Kalibrieren eines gemäß Fig. 6 und 7 hergestellten Windungskörpers 27, 37 eingesetzt werden kann. Aufgrund des geringen (nur das Vorsehen eines Dornes 21, 31 und einer Formwalze 13 erfordernden) Betriebsmittelaufwandes, der somit recht einfach ausgeführten Herstellungsvorrichtung und der möglichen numerischen Steuerbarkeit von Zustell- und Bahnbewegungen des Formwerkzeugs (Formwalze 13) wird eine hohe Flexibilität bei der Herstellung des Windungskörpers 27, 37 erreicht. Hierdurch lässt sich das Herstellungsverfahren auch für vergleichsweise kleine Stückzahlen, wie sie aufgrund des Trends zur Personalisierung von Produkten immer häufig anzutreffen sind, in wirtschaftlicher Weise einsetzen.

Der mit der Vorrichtung nach Fig. 6 hergestellte Windungskörper 27, dessen Drahtquerschnitt eine größere Breitenabmessung als Längenabmessung aufweist, erfordert eine geeignete Beschichtung oder Schmierung der Nutoberflächen im Dorn 21, um den Materialfluss des Drahtmateriales in der Nut 10 zu unterstützen. Im Gegensatz hierzu ist die in Fig. 7 schematisierte Variante mit einer kleineren Breitenabmessung als Längenabmessung im Querschnitt des aufgewickelten Drahtes und somit im Querschnitt der Nut 20 technisch einfacher umsetzbar, da hier wesentlich kleinere Fließwege für das Drahtmaterial vorliegen und auf die Verwendung einer Beschichtung oder Schmierung verzichtet werden könnte.

Nach Abschluss des in Fig. 6 und 7 dargestellten zeitgleichen Wickelns und Querschnittsverformens des runden Ausgangsdrahtes 2 wird ein Windungskörper 27, 37 mit einem rechteckförmig abgeflachten Drahtquerschnitt erhalten, der in die schraubenlinienförmige Nut 10, 20 des Wickeldornes 21, 31 passgenau aufgenommen ist. Für den Fall eines zylindrisch gewickelten Windungskörpers 27, 37 könnte diese Spule 27, 37 einfach vom Dorn 21, 31 heruntergeschraubt werden. Soll aber ein von der idealen zylindrischen Form abweichender Windungskörper hergestellt werden, so ist der Wickeldorn 21, 31 als in mehrere Teile zerlegbar auszubilden, da nur durch die Zerlegung des Wickeldornes 21, 31 die Spule 27, 37 ohne Deformationen von diesem Wickeldorn 21, 31 entformt werden kann.

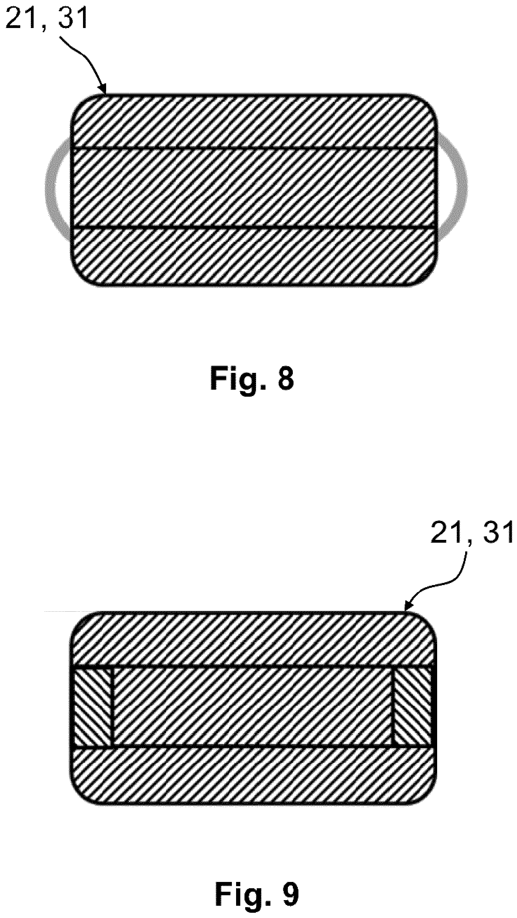

Fig. 8 und 9 zeigen jeweils die mehrteilige Ausführung eines Wickeldornes 21, 31 für die Herstellung eines (in Draufsicht gesehen) rechteckförmig gewickelten Windungskörpers 27, 37 mittels einer Vorrichtung nach Fig. 6 oder 7. In Fig. 8 ist in einer Schnittansicht senkrecht zur Dorn-Längsachse ein Dorn 21, 31 gezeigt, der dann zur Anwendung gelangen kann, wenn der aufgewickelte Draht des Windungskörpers 27, 37 im Bereich des Wickelkopfes keine Querschnittsänderung erfährt. In einem solchen Fall reicht es aus, den Dorn 21, 31 dreiteilig auszuführen. Werden aber auch im Bereich des Wickelkopfes der Spule 27, 37 die Drahtquerschnitte umgeformt, so ist der Dorn 21, 31 aufwendiger zu teilen und bspw. - wie in Fig. 9 dargestellt - in der Form eines 5-teiligen Dornes 21, 31 auszugestalten.

Durch die im Vorhergehenden anhand Fig. 1A bis 9 beschriebenen Ausführungsvarianten eines Verfahrens zur Herstellung eines Windungskörpers 7, 17, 27, 37 wird ein zeit- und damit kostensparender Effekt erzielt, da das Wickeln des Drahtes 2 um den Dorn 1, 11, 21, 31 unter gleichzeitiger Veränderung seines Querschnitts von einer runden in eine unrunde (z. B. rechteckige oder trapezförmige) Form erfolgt. Separate Verfahrensschritte und somit separate Werkzeuganordnungen für die dreidimensionale Wicklung einerseits und die Querschnittsveränderung des Drahtes andererseits werden demzufolge nicht benötigt, was vorteilhafterweise neben einer deutlichen Verkürzung der Herstellungszeit auch zu einer Senkung der Werkzeugkosten führt.

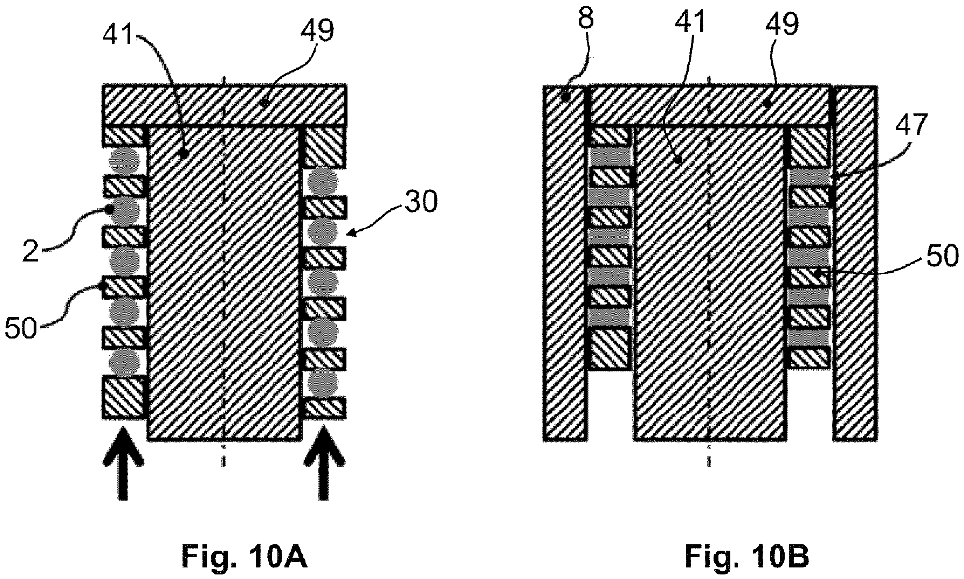

Allerdings bestehen bei der Verwendung von Dornen 1, 11, 21, 31 ohne oder mit festen Nuten 10, 20 durchaus Nachteile, die durch Anwendung einer flexiblen Nut 30 aufgehoben werden könnten. Dementsprechend wird in Fig. 10A und 10B in zeitlich aufeinanderfolgenden Verfahrensstadien eine alternative Ausführungsform einer nicht von der Erfindung umfassten Vorrichtung zur Herstellung einer elektrotechnischen Spule 47 gezeigt. Diese Vorrichtung umfasst einen Dorn 41 mit einem durchmessererweiterten Kopfstück 49, wobei eine schraubenlinienförmige Druckfeder 50 in ihrer ganzen Länge auf den Dorn 41 aufgeschoben und mit ihrem Ende gegen das Kopfstück 49 in axialer Richtung abgestützt ist, sodass im Ergebnis der Dorn 41 die Innengeometrie der Druckfeder 50 nahtlos ausfüllt.

Die Druckfeder 50 dient als Umformwerkzeug, um den Drahtquerschnitt in eine gewünschte rechteckförmig abgeflachte Geometrie zu überführen. Zu diesem Zweck besteht die Druckfeder 50 aus einem elastischen Drahtmaterial, das eine rechteckförmige Querschnittskontur aufweist, wobei die einzelnen Windungen des Federkörpers auf Abstand gewickelt sind. Infolgedessen ist zwischen den Windungen der Druckfeder 50 eine vom Dorn 41 separate, flexible schraubenlinienförmige Nut 30 mit einem rechtförmigen Querschnitt ausgebildet, die der Aufnahme des um den Dorn 41 zu wickelnden elektrisch leitfähigen Drahtes 2 dient.

Gemäß Fig. 10A steht bei entspannter Druckfeder 50 (also bei maximal aufgeweiteter Nut 30 zwischen den Windungen der Druckfeder 50) ein ausreichender Zwischenraum zur Verfügung, um bei Rotation des Dornes 41 den zugeführten Runddraht 2 in die von der Druckfeder 50 gebildete Nut 30 einzuziehen/einzuwickeln. Im Anschluss wird der Dorn 41 mit aufgesteckter Druckfeder 50 und eingewickeltem Runddraht 2 annähernd passgenau in eine hohlzylindrische Hülse 8 (die im weitesten Sinne ein Gesenk darstellt) eingesetzt. Daraufhin wird durch ein (nicht zeichnerisch wiedergegebenes) hülsenförmiges Stempelwerkzeug eine die Druckfeder 50 komprimierende Kraft in Pfeilrichtung ausgeübt. Hierdurch wird der Drahtquerschnitt des Windungskörpers 47 zwischen den Windungen der Druckfeder 50 von seinem runden Ausgangsquerschnitt (gemäß Fig. 10A) zum gewünschten rechteckförmigen Endquerschnitt (gemäß Fig. 10B) pressend umgeformt. Idealerweise wird bei dieser Umformoperation auch direkt der Bereich der Kontakte mit verformt, um den Windungskörper 47 in seine endgültige, einbaufertige Form zu bringen.

Mit einer Vorrichtung nach Fig. 10A und 10B können Windungskörper 47 mit in Draufsicht (parallel zur Spulenlängsachse) gesehen beliebigen, also nicht nur mit runden, sondern bspw. auch mit rechteckförmigen Wicklungsformen hergestellt werden. Hierfür müssen nur der Dorn 41, die Druckfeder 50, die Hülse 8 und das Stempelwerkzeug senkrecht zu ihrer Längsachse jeweils eine entsprechende Querschnittgestaltung aufweisen.

Bei Verwendung des in Fig. 10A und 10B dargestellten Werkzeugaufbaus mit einer auf einen Dorn 41 aufgesteckten schraubenlinienförmigen Druckfeder 50 zur Realisierung einer flexiblen Spiralnut 30 kann - im Falle einer in Draufsicht gesehen runden Spulengeometrie - nach Wickeln und Umformen des Drahtes 2 ein Entformen des fertiggestellten Windungskörpers 47 einfach dadurch bewerkstelligt werden, dass der Windungskörper 47 analog zu einem Gewinde aus der Druckfeder 50 herausgedreht wird. Bei einer von einer kreisrunden Form abweichenden Geometrie kann der Dorn 41 herausgezogen werden und der Windungskörper 47 seitlich aus der Druckfeder 50 herausgenommen werden.

Eine konische Außengeometrie des Windungskörpers 47 lässt sich dabei durch eine entsprechende geometrische Gestaltung der Druckfeder 50 und des Werkzeugteils (z. B. der Hülse 8 gemäß Fig. 10B) zur Führung der Druckfeder 50 während des Querschnittsumformvorganges realisieren. Hierbei wird der Umformprozess idealerweise von der breiten Seite des Werkzeugs gestartet. In diesem Zusammenhang ist es ratsam, den Draht 2 vor dem Umformprozess einer Wärmebehandlung zu unterziehen, um die konische Umformung mit den dafür benötigten Umformeigenschaften zu erreichen.

Um bei der in Fig. 10A und 10B dargestellten Verformung des Drahtquerschnitts zwischen den jeweils axial benachbarten Windungen der Druckfeder 50 das Fließen des Drahtmateriales in einer radialen Richtung des Dornes 41 zu fördern, können die einzelnen Windungen der Druckfeder 50 mit einer Schmierung oder Beschichtung versehen sein. Durch eine in Drahtlängsrichtung der Druckfeder 50 variable Einstellung der Schmierung oder Beschichtung und eine sich infolgedessen unterschiedlich ausbildende Reibung bei der Umformung kann zudem der Materialfluss in radialer Richtung gezielt beeinflusst werden, um - in Draufsicht gesehen - eine gewünschte Windungskörpergeometrie, z. B. einen konisch gestalteten Windungskörper zu erhalten.

Das Wickeln und die Querschnittsverformung finden zwar gemäß Fig. 10A und 10B in zeitlich aufeinanderfolgenden Schritten statt; jedoch ergibt sich gegenüber dem Stand der Technik immer noch der signifikante Vorteil, dass auf teure anwendungsspezifische Werkzeuge (wie bspw. auf das in DE 10 2013 012 659 A1 vorgeschlagene komplexe Prägewerkzeug) verzichtet werden kann. Stattdessen ist die hier offenbarte Vorrichtung ausgesprochen einfach aufgebaut und vielseitig verwendbar.

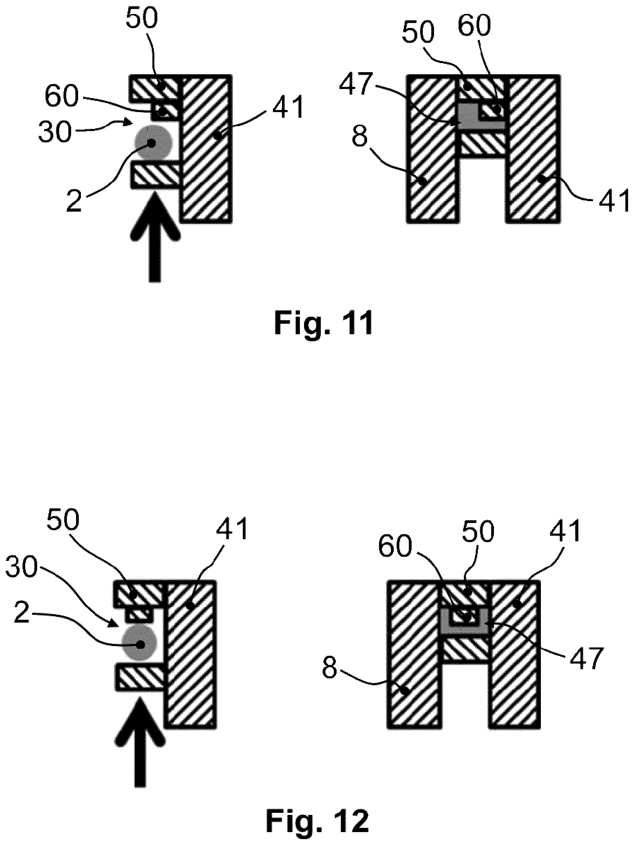

Des Weiteren bietet gegenüber dem Lösungsansatz nach Fig. 6 und 7 mit einer festen, in die Außenumfangsfläche des Dornes 21, 31 eingeformten Nut 10, 20 die Verwendung einer Druckfeder 50 mit einer flexiblen Nut 30 den Vorteil, dass auch Windungskörper 47 hergestellt werden können, deren Drahtquerschnitte von einer idealen Rechteckform abweichen. Hierzu müssen lediglich gemäß Fig. 11 und 12 in der flexiblen Nut 30 zwischen den Windungen der Druckfeder 50 Einlegeteile 60 angeordnet werden. Solche Einlegeteile 60 können durch Ringsegmente oder eine zusätzliche Druckfeder gebildet sein, die entweder vorab mit der Druckfeder verbunden oder unabhängig von der Druckfeder auf den Wickeldorn 41 aufgeschoben werden.

Um zusätzliche Einprägungen/Vertiefungen in das rechteckförmige Querschnittsprofil des Drahtes des Windungskörpers 47 einzubringen, sind die gemäß Fig. 11 und 12 vorgesehenen Einlegeteile 60 in ihrer parallel zur Längsachse des Dornes gemessene Länge und parallel zur radialen Richtung des Dornes gemessenen Breite jeweils kleiner als die entsprechende Länge und Breite der zwischen den Windungen der Druckfeder 50 ausgebildeten Nut 30. Die beiden Ausführungsbeispiele nach Fig. 11 und 12 unterscheiden sich im Hinblick auf die radiale Positionierung des Einlegeteils 60. Während gemäß Fig. 11 das Einlegeteil 60 bündig an der Außenmantelfläche des Dornes 41 anliegt, um somit nach dem Pressvorgang einen Windungskörper 47 mit L-förmigem Drahtquerschnittsprofil zu erhalten, ist das Einlegeteil 60 in Fig. 12 beabstandet zur Außenmantelfläche des Dornes 41 in radialer Richtung zentral innerhalb der flexiblen Nut 30 angeordnet, wodurch nach dem Pressvorgang ein Windungskörper 47 mit U-förmigem Drahtquerschnittsprofil erhalten wird. Die gemäß Fig. 11 bzw. 12 im L-Profil bzw. U-Profil des Drahtquerschnitts jeweils eingebrachte fortlaufende Vertiefung (Sicke) kann bspw. der Durchleitung von Kühlmedien dienen und/oder eine stabilisierende (versteifende) Wirkung entfalten.

Hauptanwendungsgebiet der erfindungsgemäß hergestellten Windungskörper 7, 17 sind elektrische Maschinen (wie Generatoren, Motoren, Transformatoren) und Komponenten (elektrotechnische Spulen, Drosseln oder sonstige induktive Bauteile). Weiterhin lässt sich die Erfindung aber überall dort vorteilhaft anwenden, wo flache Profile um enge Radien gebogen werden müssen und die übliche Änderung des Querschnitts zu Nachteilen führt.

## Patentansprüche

1. Vorrichtung zur Herstellung eines Windungskörpers (7, 17) aus einem zugeführten Draht (2), umfassend einen um seine zentrale Längsachse rotierbaren Dorn (1, 11) oder ein um seine zentrale Längsachse rotierbares Gesenk (5a, 5b), um den bzw. in den der zugeführte Draht (2) aufwickelbar ist, und ein Formwerkzeug (3, 3a), das derart ausgebildet und angeordnet ist, um am Aufwickelpunkt (P1, P2) des Drahtes (2) auf dem Dorn (1, 11) bzw. am Aufwickelpunkt (P3) des Drahtes (2) im Gesenk (5a, 5b) eine querschnittsverändernde Umformkraft auf den Draht (2) auszuüben, wobei das Formwerkzeug als eine um seine zentrale Längsachse rotierbare Formwalze (3, 3a) ausgebildet ist, **dadurch gekennzeichnet, dass** die zentrale Längsachse der Formwalze (3, 3a) gegenüber der zentralen Längsachse des Dornes (1, 11) bzw. des Gesenkes (5a, 5b) schräg angestellt ist.

2. Vorrichtung nach Anspruch 1, **dadurch gekennzeichnet, dass** der Dorn (1) bzw. das Gesenk (5a, 5b) mit einer ortsfesten Schulter (4, 24) versehen ist, wobei der Dorn (1) und/oder die Formwalze (3, 3a) bzw. das Gesenk (5a, 5b) und/oder die Formwalze (3, 3a) während des Wickelvorganges in ihrer Längsrichtung verschiebbar ausgeführt sind.

3. Vorrichtung nach Anspruch 1, **dadurch gekennzeichnet, dass** der Dorn (11) bzw.
das Gesenk mit einer beweglichen Schulter (14) versehen ist, wobei die Schulter (14) ausgelegt ist, während des Wicklungsvorganges in Längsrichtung des Dornes (11) bzw. des Gesenkes eine Vorschubbewegung auszuführen.

4. Vorrichtung nach zumindest einem der vorhergehenden Ansprüche 1 bis 3, **dadurch gekennzeichnet, dass** die Formwalze (3a) in radialer Richtung relativ zum Dorn (11) bzw. relativ zum Gesenk zustellbar ist, um dadurch einen konischen Windungskörper (17) zu erzeugen.

5. Verfahren zur Herstellung eines Windungskörpers (7, 17) aus einem zugeführten Draht (2), wobei der zugeführte Draht (2) um einen um seine zentrale Längsachse rotierbaren Dorn (1, 11) oder in ein um seine zentrale Längsachse rotierbares Gesenk (5a, 5b) aufgewickelt wird, wobei ein Formwerkzeug (3, 3a), das als eine um seine zentrale Längsachse rotierbare Formwalze (3, 3a) ausgebildet ist, am Aufwickelpunkt (P1, P2) des Drahtes (2) auf dem Dorn (1, 11) bzw. am Aufwickelpunkt (P3) des Drahtes (2) im Gesenk (5a, 5b) eine querschnittsverändernde Umformkraft auf den Draht (2) ausübt, **dadurch gekennzeichnet, dass** die zentrale Längsachse der Formwalze (3, 3a) gegenüber der zentralen Längsachse des Dornes (1, 11) bzw. des Gesenkes (5a, 5b) schräg angestellt wird.

## Claims

1. Device for producing a winding element (7, 17) from a supplied wire (2), comprising a mandrel (1, 11) rotatable about its central longitudinal axis or a die (5a, 5b) rotatable about its central longitudinal axis around which or into which said supplied wire (2) can be wound, and a forming tool (3, 3a) which is configured and arranged to exert a cross-sectional forming force upon said wire (2) at a winding point (P1, P2) of said wire (2) onto said mandrel (1, 11) or at a winding point (P3) of said wire (2) in said die (5a, 5b), wherein said forming tool is configured as a section roller (3, 3a) that is rotatable about its central longitudinal axis, **characterized in that** said central longitudinal axis of said section roller (3, 3a) is set at an angle relative to the central longitudinal axis of said mandrel (1, 11) or said die (5a, 5b).

2. Device according to claim 1, **characterized in that** said mandrel (1) or said die (5a, 5b) is provided with a stationary shoulder (4, 24), where said mandrel (1) and/or said section roller (3, 3a), or said die (5a, 5b) and/or said section roller (3, 3a) are configured to be slidable in their longitudinal direction during the winding process.

3. Device according to claim 1, **characterized in that** said mandrel (11) or said die is provided with a movable shoulder (14), where said shoulder (14) is configured to execute an advancing motion during the winding process in the longitudinal direction of said mandrel (11) or said die.

4. Device according to at least one of the preceding claims 1 to 3, **characterized in that** said section roller (3a) is positionable in the radial direction relative to said mandrel (11) or relative to said die to thereby produce a conical winding element (17).

5. Method for producing a winding element (7, 17) from a supplied wire (2), wherein said supplied wire (2) is wound around a mandrel (1, 11) rotatable about its central longitudinal axis or into a die (5a, 5b) rotatable about its central longitudinal axis, where a forming tool (3, 3a), which is configured as a section roller (3, 3a) that is rotatable about its central longitudinal axis, exerts a cross-sectional forming force upon said wire (2) at a winding point (P1, P2) of said wire (2) onto said mandrel (1, 11) or at a winding point (P3) of said wire (2) in said die (5a, 5b), **characterized in that** said central longitudinal axis of said section roller (3, 3a) is set at an angle relative to the central longitudinal axis of said mandrel (1, 11) or said die (5a, 5b).

## Revendications

1. Dispositif de fabrication d'un corps bobiné (7, 17) à partir d'un fil acheminé (2), comprenant un mandrin (1, 11) pouvant tourner autour de son axe longitudinal central ou une matrice (5a, 5b) pouvant tourner autour de son axe longitudinal central, autour duquel ou dans lequel le fil acheminé (2) peut être enroulé, et un outil de formage (3, 3a) qui est conçu et agencé de manière à exercer sur le fil (2) une force de déformation modifiant la section transversale au niveau du point d'enroulement (P1, P2) du fil (2) sur le mandrin (1, 11) ou au niveau du point d'enroulement (P3) du fil (2) dans la matrice (5a, 5b), dans lequel l'outil de formage est conçu sous la forme d'un rouleau de formage (3, 3a) pouvant tourner autour de son axe longitudinal central, **caractérisé en ce que** l'axe longitudinal central du rouleau de formage (3, 3a) est incliné par rapport à l'axe longitudinal central du mandrin (1, 11) ou de la matrice (5a, 5b).

2. Dispositif selon la revendication 1, **caractérisé en ce que** le mandrin (1) ou la matrice (5a, 5b) est muni(e) d'un épaulement fixe (4, 24), dans lequel le mandrin (1) et/ou le rouleau de formage (3, 3a) ou la matrice (5a, 5b) et/ou le rouleau de formage (3, 3a) sont réalisés de manière à pouvoir coulisser dans leur direction longitudinale pendant le processus d'enroulement.

3. Dispositif selon la revendication 1, **caractérisé en ce que** le mandrin (11) ou la matrice est muni(e) d'un épaulement mobile (14), dans lequel l'épaulement (14) est configuré pour effectuer un déplacement de coulissement dans la direction longitudinale du mandrin (11) ou de la matrice pendant le processus d'enroulement.

4. Dispositif selon au moins l'une quelconque des revendications précédentes 1 à 3, **caractérisé en ce que** le rouleau de formage (3a) peut être placé dans une direction radiale par rapport au mandrin (11) ou par rapport à la matrice, pour ainsi produire un corps bobiné conique (17).

5. Procédé de fabrication d'un corps bobiné (7, 17) à partir d'un fil acheminé (2), dans lequel le fil acheminé (2) est enroulé autour d'un mandrin (1, 11) pouvant tourner autour de son axe longitudinal central ou dans une matrice (5a, 5b) pouvant tourner autour de son axe longitudinal central, dans lequel un outil de formage (3, 3a) qui est conçu sous la forme d'un rouleau de formage (3, 3a) pouvant tourner autour de son axe longitudinal central exerce une force de formage modifiant la section transversale sur le fil (2) au niveau du point d'enroulement (P1, P2) du fil (2) sur le mandrin (1, 11) ou au niveau du point d'enroulement (P3) du fil (2) dans la matrice (5a, 5b), **caractérisé en ce que** l'axe longitudinal central du rouleau de formage (3, 3a) est incliné par rapport à l'axe longitudinal central du mandrin (1, 11) ou de la matrice (5a, 5b).
